# EUROPEAN PATENT APPLICATION

(11) **EP 4 563 801 A1**
(43) Date of publication of application: **04.06.2025**
(21) Application number: 23845936.6
(22) Date of filing: 27.04.2023
(51) Int. Cl.: F02C 7/232, F23R 3/28, F23R 3/30

(54) **COMBUSTION SYSTEM**

(30) Priority: 27.07.2022 JP 2022119760
(71) Applicant: IHI Corporation, Tokyo 135-8710 (JP)
(72) Inventor: KOMATSU, Yusuke, Tokyo 135-8710 (JP); UCHIDA, Masahiro, Tokyo 135-8710 (JP); ITO, Shintaro, Tokyo 135-8710 (JP)
(74) Representative: Marks & Clerk LLP
(86) International application number: PCT/JP2023/016747
(87) International publication number: WO 2024/024197

(57) **Abstract**

A combustion system 10 includes: a combustion chamber 13c; a cylindrical air chamber 31 having an injection hole 31a facing the inside of the combustion chamber 13c; a fuel supply flow path 41 connected with the air chamber 31; and an air supply flow path 32 connected with a side surface of the air chamber 31.

## Description

### Technical Field

The present disclosure relates to a combustion system. The present application claims the benefit of priority based on Japanese Patent Application No. 2022-119760 filed on July 27, 2022, the content of which is incorporated herein.

### Background Art

Gas turbine systems, with which power is obtained by combusting fuel in a combustor, are used. Some of combustion systems of gas turbine systems use, for example, hydrogen as fuel as disclosed in Patent Literature 1. By using hydrogen as fuel, carbon dioxide emission is suppressed.

### Citation List

### Patent Literature

Patent Literature 1: JP 2015-014400 A

### Summary

### Technical Problem

In combustion systems, it is desired to protect burners from flame. For example, the rate of combustion of hydrogen is quite high as compared to the rate of combustion of other fuels such as natural gas. Therefore, in a case where hydrogen is used as a fuel, backfire (namely, a phenomenon in which flame flows back into the burner) is likely to occur due to uneven mixing of hydrogen and air. In addition, the temperature of the flame formed by combustion of hydrogen is higher than the temperature of flames formed by combustion of other fuels. Therefore, the burner is easily eroded by the flame. In a case where hydrogen is used as fuel as described above, it is highly required to protect the burner from the flame.

An object of the present disclosure is to provide a combustion system capable of protecting a burner from flame.

### Solution to Problem

In order to solve the above problems, a combustion system of the present disclosure includes a combustion chamber, a cylindrical air chamber having an injection hole facing the inside of the combustion chamber, a fuel supply flow path connected with the air chamber, and an air supply flow path connected with a side surface of the air chamber.

The air supply flow path may be eccentrically connected with the air chamber with respect to the central axis of the air chamber.

The air chamber may have a cylindrical shape.

The air supply flow path may include a plurality of flow paths connected to one air chamber.

The air chamber, the fuel supply flow path, and the air supply flow path may be formed in a burner plate that closes an end of the combustion chamber.

A fuel manifold may be formed in the burner plate.

### Advantageous Effects of Invention

According to the present disclosure, a burner can be protected from flame.

### Brief Description of Drawings

Fig. 1 is a schematic diagram illustrating a configuration of a gas turbine system according to an embodiment of the present disclosure.
Fig. 2 is a diagram of a burner plate according to the embodiment of the present disclosure as viewed from a combustion chamber side.
Fig. 3 is a cross-sectional view taken along line A2-A2 in Fig. 2.
Fig. 4 is a cross-sectional view taken along line A3-A3 in Fig. 3.
Fig. 5 is a diagram of a burner plate according to a first modification as viewed from a combustion chamber side.
Fig. 6 is a cross-sectional view taken along line A4-A4 in Fig. 5.
Fig. 7 is a cross-sectional view taken along line A5-A5 in Fig. 6.
Fig. 8 is a diagram of a burner plate according to a second modification as viewed from a combustion chamber side.
Fig. 9 is a cross-sectional view taken along line A6-A6 in Fig. 8.
Fig. 10 is a cross-sectional view taken along line A7-A7 in Fig. 9.
Fig. 11 is a diagram illustrating an example of a connection relationship between an air chamber and air supply flow paths according to an embodiment of the present disclosure.
Fig. 12 is a diagram illustrating an example of a connection relationship between an air chamber and air supply flow paths according to an embodiment of the present disclosure.
Fig. 13 is a diagram illustrating an example of a connection relationship between an air chamber and air supply flow paths according to an embodiment of the present disclosure.

### Description of Embodiments

Embodiments of the present disclosure will be described below by referring to the accompanying drawings. Dimensions, materials, other specific numerical values, and the like illustrated in the embodiments are merely an example for facilitating understanding, and the present disclosure is not limited thereto unless otherwise specified. Note that, in the present specification and the drawings, components having substantially the same function and structure are denoted by the same symbol, and redundant explanations are omitted. Illustration of components not directly related to the present disclosure is omitted.

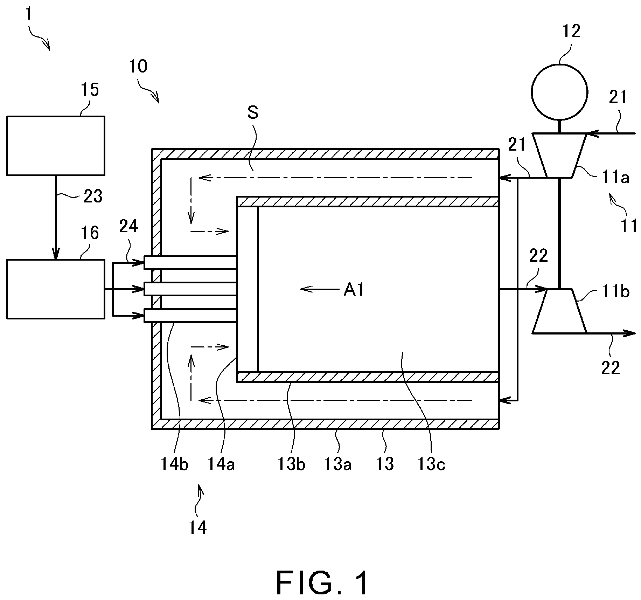

Fig. 1 is a schematic diagram illustrating a configuration of a gas turbine system 1 according to the present embodiment. As illustrated in Fig. 1, the gas turbine system 1 includes a turbocharger 11, a generator 12, a combustor 13, a burner 14, a hydrogen tank 15, and a flow rate control valve 16.

In the gas turbine system 1, the combustor 13, the burner 14, the hydrogen tank 15, and the flow rate control valve 16 are included in a combustion system 10.

The turbocharger 11 includes a compressor 11a and a turbine 11b. The compressor 11a and the turbine 11b rotate in an integrated manner. The compressor 11a and the turbine 11b are connected by a shaft.

The compressor 11a is provided in an intake flow path 21 connected with the combustor 13. The air supplied to the combustor 13 flows through the intake flow path 21. An intake port (not illustrated) through which the air is taken in from the outside is provided at an upstream end of the intake flow path 21. The air taken in from the intake port passes through the compressor 11a and is sent to the combustor 13. The compressor 11a compresses the air and discharges the air to the downstream side.

The turbine 11b is provided in an exhaust flow path 22 connected with the combustor 13. Exhaust gas discharged from the combustor 13 flows through the exhaust flow path 22. An exhaust port (not illustrated) through which the exhaust gas is discharged to the outside is provided at a downstream end of the exhaust flow path 22. The exhaust gas discharged from the combustor 13 passes through the turbine 11b and is sent to the exhaust port. The turbine 11b generates rotational power by being turned by the exhaust gas.

The generator 12 is connected with the turbocharger 11. The generator 12 generates electric power using the rotational power generated by the turbocharger 11.

The combustor 13 includes a casing 13a, a liner 13b, and a combustion chamber 13c. The casing 13a has a substantially cylindrical shape. The liner 13b is included inside the casing 13a. The liner 13b has a substantially cylindrical shape. The liner 13b is disposed coaxially with the casing 13a. The combustion chamber 13c is formed inside the liner 13b. That is, the internal space of the liner 13b corresponds to the combustion chamber 13c. The combustion chamber 13c is a substantially cylindrical space. The exhaust flow path 22 is connected to the combustion chamber 13c.

As described later, hydrogen and air are supplied to the combustion chamber 13c. In the combustion chamber 13c, hydrogen is used as fuel, and combustion is performed. However, fuel other than hydrogen may be used as the fuel. The exhaust gas generated by the combustion in the combustion chamber 13c is discharged to the exhaust flow path 22. A space S is formed between the inner surface of the casing 13a and the outer surface of the liner 13b. The intake flow path 21 is connected to the space S. Air is supplied from the compressor 11a to the space S via the intake flow path 21. An opening is formed at an end (an end on the left side in Fig. 1) of the liner 13b. The burner 14 is inserted through the opening at the end of the liner 13b.

The burner 14 includes a burner plate 14a and a plurality of fuel supply pipes 14b. The burner plate 14a closes the opening at the end of the liner 13b. That is, the burner plate 14a closes the end of the combustion chamber 13c. The burner plate 14a has a disk shape. The fuel supply pipes 14b are connected to a face of the burner plate 14a on a side opposite to the combustion chamber 13c side. The fuel supply pipes 14b penetrate the casing 13a and extend to the outside of the casing 13a. In Fig. 1, three fuel supply pipes 14b are illustrated. However, the number of fuel supply pipes 14b is not limited.

Hydrogen is sent to the fuel supply pipes 14b as described later. Hydrogen is further sent to the burner plate 14a via the fuel supply pipes 14b. As indicated by an alternate long and short dash line arrow in Fig. 1, the air sent to the space S passes through the space S and then sent from the face of the burner plate 14a on the opposite side to the combustion chamber 13c to the inside of the burner plate 14a. However, a through hole may be included in the side surface of the liner 13b, and air may be sent from the space S to the inside of the burner plate 14a via the through hole. The hydrogen sent to the burner plate 14a is injected into the combustion chamber 13c while being mixed with air as described later.

Hydrogen is stored in the hydrogen tank 15. Note that, in the hydrogen tank 15, hydrogen may be liquid or gas. The hydrogen tank 15 is connected with the flow rate control valve 16 via a flow path 23. The flow rate control valve 16 is connected with each of the fuel supply pipes 14b of the burner 14 via flow paths 24. Hydrogen stored in the hydrogen tank 15 is supplied to the fuel supply pipes 14b via the flow path 23, the flow rate control valve 16, and the flow paths 24. The flow rate control valve 16 controls (namely, adjusts) the flow rate of hydrogen supplied from the hydrogen tank 15 to the fuel supply pipes 14b. With the opening degree of the flow rate control valve 16 adjusted, the amount of hydrogen supplied from the hydrogen tank 15 to the fuel supply pipes 14b is adjusted.

Hereinafter, the circumferential direction of the combustion chamber 13c and the burner plate 14a is also simply referred to as a circumferential direction. The radial direction of the combustion chamber 13c and the burner plate 14a is also simply referred to as a radial direction. The axial direction of the combustion chamber 13c and the burner plate 14a is also simply referred to as an axial direction.

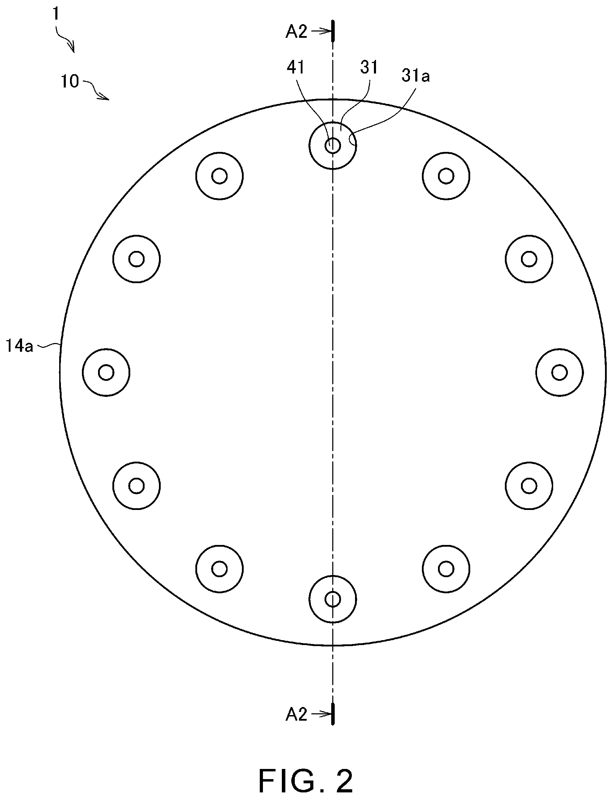

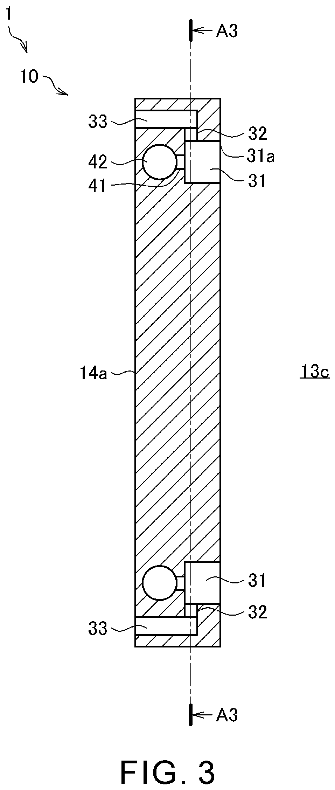

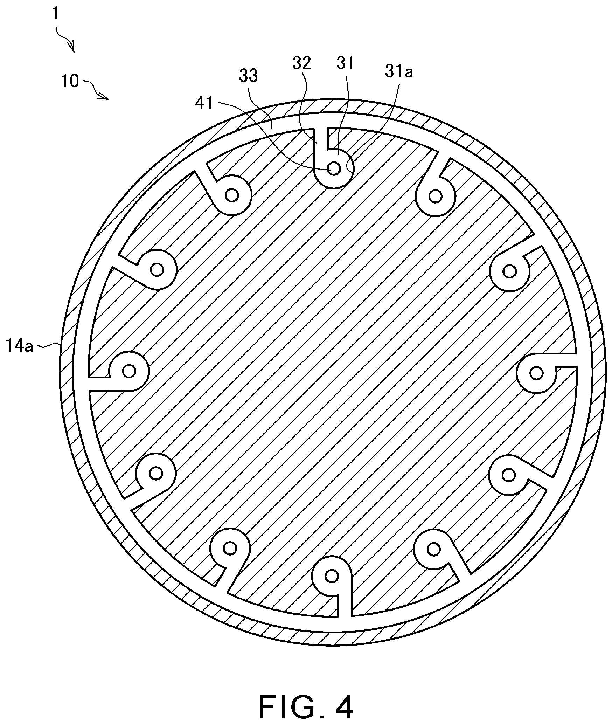

Fig. 2 is a diagram of the burner plate 14a as viewed from the combustion chamber 13c side (specifically, diagram as viewed from a direction of an arrow A1 in Fig. 1). Fig. 3 is a cross-sectional view taken along line A2-A2 in Fig. 2. That is, Fig. 3 is a cross-sectional view of the burner plate 14a as viewed in the radial direction. Fig. 4 is a cross-sectional view taken along line A3-A3 in Fig. 3. That is, Fig. 4 is a cross-sectional view of the burner plate 14a as viewed in the axial direction.

As illustrated in Figs. 2 to 4, in the burner plate 14a, air chambers 31, air supply flow paths 32, an air manifold 33, fuel supply flow paths 41, and a fuel manifold 42 are formed.

A plurality of air chambers 31 is included at intervals in the circumferential direction on the outer peripheral side of the burner plate 14a. In the example of Figs. 2 to 4, the plurality of air chambers 31 is included at equal intervals in the circumferential direction. However, the plurality of air chambers 31 may be included at unequal intervals in the circumferential direction. Moreover, the number of air chambers 31 is not limited to the example of Figs. 2 to 4.

An air chamber 31 has a tubular shape. In the example of Figs. 2 to 4, the air chambers 31 have a cylindrical shape. However, the air chamber 31 only needs to have a tubular shape and may have a shape other than the cylindrical shape (for example, an elliptical cylindrical shape or the like). In the example of Figs. 2 to 4, the air chambers 31 extend in the axial direction of the combustion chamber 13c. That is, the central axis of an air chamber 31 extends in the axial direction of the combustion chamber 13c. However, the central axis of an air chamber 31 may be inclined with respect to the axial direction of the combustion chamber 13c. The air chambers 31 open on the face of the burner plate 14a facing the combustion chamber 13c. These openings correspond to injection holes 31a facing the inside of the combustion chamber 13c. As will be described later, hydrogen and air supplied to the air chamber 31 are injected from the injection holes 31a to the combustion chamber 13c while being mixed with each other.

An air supply flow path 32 is connected with an air chamber 31. In the example of Figs. 2 to 4, one air supply flow path 32 is connected to one air chamber 31. However, as will be described later, a plurality of air supply flow paths 32 may be connected to one air chamber 31. Each of the air supply flow paths 32 is connected with the air manifold 33. Air is supplied from the air manifold 33 to each of the air supply flow paths 32. The air is further supplied to the air chambers 31 via the air supply flow paths 32.

Specifically, an air supply flow path 32 is connected with a side surface of an air chamber 31. With this structure, the air sent from the air supply flow path 32 to the air chamber 31 swirls in the circumferential direction of the air chamber 31 in the air chamber 31. In particular, as illustrated in Fig. 4, the air supply flow path 32 is eccentrically connected with the air chamber 31 with respect to the central axis of the air chamber 31. That is, a line extended from the air supply flow path 32 does not pass through the central axis of the air chamber 31. This structure allows the air, sent from the air supply flow path 32 to the air chamber 31, to swirl in the circumferential direction of the air chamber 31 in the air chamber 31 more easily.

In the example of Fig. 4, the air supply flow path 32 is connected with the air chamber 31 in a tangential direction of the air chamber 31. Incidentally, in a case where the air supply flow path 32 is eccentrically connected with the air chamber 31 with respect to the central axis of the air chamber 31, the connection direction between the air supply flow path 32 and the air chamber 31 may not be the tangential direction of the air chamber 31. Moreover, the air supply flow path 32 may not be eccentric with respect to the central axis of the air chamber 31. Even in this case, the air can be caused to swirl in the air chamber 31 by appropriately setting the flow direction of the air flowing into the air chamber 31 from the air supply flow path 32, the shape of the air chamber 31, or the like. From the viewpoint of Fig. 3, the air supply flow path 32 extends in a direction orthogonal to the axial direction of the burner plate 14a. However, from the viewpoint of Fig. 3, the air supply flow path 32 may be inclined with respect to the direction orthogonal to the axial direction of the burner plate 14a.

The air manifold 33 communicates with the space S (see Fig. 1) in the combustor 13. In the example of Figs. 2 to 4, the air manifold 33 has an annular shape extending in the circumferential direction of the burner plate 14a. However, the shape of the air manifold 33 is not limited to the example of Figs. 2 to 4. The air manifold 33 opens on a face of the burner plate 14a on the opposite side to the combustion chamber 13c. Air is supplied to the air manifold 33 from the space S in the combustor 13. Each of the air supply flow paths 32 is connected to the air manifold 33. In the example of Figs. 2 to 4, the air manifold 33 is included on a radially outer side with respect to the air chambers 31, and each of the air supply flow paths 32 extends radially inward from the air manifold 33. However, the air manifold 33 may be included on a radially inner side with respect to the air chambers 31. In this case, each of the air supply flow paths 32 extends radially outward from the air manifold 33.

As described above, each of the air chambers 31 is connected with the air manifold 33 via an air supply flow path 32. Therefore, air is supplied from the air manifold 33 to each of the air chambers 31 via an air supply flow path 32. In an air chamber 31, a swirling flow of air swirling in the circumferential direction of the air chamber 31 is generated.

A fuel supply flow path 41 is connected with an air chamber 31. In the example of Figs. 2 to 4, one fuel supply flow path 41 is connected to one air chamber 31. However, a plurality of fuel supply flow paths 41 may be connected to one air chamber 31. Each of the fuel supply flow paths 41 is connected with the fuel manifold 42. Hydrogen is supplied from the fuel manifold 42 to each of the fuel supply flow paths 41. The hydrogen is further supplied to the air chambers 31 via the fuel supply flow paths 41. Specifically, a fuel supply flow path 41 is connected with the bottom surface (namely, the surface facing an injection hole 31a) of an air chamber 31. However, the fuel supply flow path 41 may be connected with a portion other than the bottom surface of the air chamber 31.

The fuel manifold 42 communicates with the fuel supply pipes 14b (see Fig. 1). In the example of Figs. 2 to 4, the fuel manifold 42 has an annular shape extending in the circumferential direction of the burner plate 14a. However, the shape of the fuel manifold 42 is not limited to the example of Figs. 2 to 4. The fuel manifold 42 communicates with the fuel supply pipes 14b via flow paths (not illustrated) opened on a face of the burner plate 14a on the opposite side to the combustion chamber 13c. Hydrogen is supplied to the fuel manifold 42 from the fuel supply pipes 14b. Each of the fuel supply flow paths 41 is connected to the fuel manifold 42. In the example of Figs. 2 to 4, the fuel manifold 42 is included side by side with the air chambers 31 in the axial direction, and each of the fuel supply flow paths 41 extends from the fuel manifold 42 in the axial direction. However, the positional relationship between the fuel manifold 42 and the air chambers 31 is not limited to the example of Figs. 2 to 4.

As described above, each of the air chambers 31 is connected with the fuel manifold 42 via a fuel supply flow path 41. Therefore, hydrogen is supplied from the fuel manifold 42 to each of the air chambers 31 via one of the fuel supply flow paths 41. The hydrogen sent to the air chamber 31 is injected together with the air from the injection hole 31a to the combustion chamber 13c while being rapidly mixed with the air by the swirl flow of the air generated in the air chamber 31.

As described above, the combustion system 10 includes: the combustion chamber 13c; the cylindrical air chambers 31 each having an injection hole 31a facing the inside of the combustion chamber 13c; the fuel supply flow paths 41 each connected with an air chamber 31; and the air supply flow paths 32 each connected with a side surface of an air chamber 31. As a result, the fuel (in the above example, hydrogen) sent to the air chamber 31 is injected together with the air from the injection hole 31a to the combustion chamber 13c while being rapidly mixed with the air by the swirl flow of the air generated in the air chamber 31. Therefore, since the fuel can be supplied to the combustion chamber 13c in a state of being effectively mixed with the air without providing a space for mixing the fuel and the air in advance, it is possible to suppress exposure of the burner 14 to the high-temperature combustion gas. Therefore, the burner 14 can be protected from flame.

Furthermore, since the fuel is supplied to the combustion chamber 13c in a state of being effectively mixed with the air, it is also possible to suppress the generation of NOx by adjusting the supply amount of air as appropriate to lower the temperature of the flame. Furthermore, since the fuel and the air are mixed independently in each of the air chambers 31, the degree of freedom in the arrangement of the injection holes 31a is enhanced. Furthermore, since the generation of the swirl flow of the combustion gas swirling in the circumferential direction inside the combustion chamber 13c can be suppressed, it is possible to suppress the generation of a circulation flow, which is a flow of the combustion gas flowing towards the burner plate 14a through the vicinity of the central axis of the swirl flow (namely, the vicinity of the central axis of the combustion chamber 13c).

In particular, in the combustion system 10, the air supply flow path 32 is eccentrically connected with the air chamber 31 with respect to the central axis of the air chamber 31. This structure allows the air, sent from the air supply flow path 32 to the air chamber 31, to swirl in the circumferential direction of the air chamber 31 in the air chamber 31 more easily. Therefore, the fuel can be more effectively mixed with the air in the air chamber 31.

In particular, in the combustion system 10, the air chambers 31 have a cylindrical shape. This structure allows the air, sent from the air supply flow path 32 to the air chamber 31, to swirl in the circumferential direction of the air chamber 31 in the air chamber 31 more easily. Therefore, the fuel can be more effectively mixed with the air in the air chamber 31.

In particular, in the combustion system 10, the air chambers 31, the fuel supply flow paths 41, and the air supply flow paths 32 are formed in the burner plate 14a that closes the end of the combustion chamber 13c. Therefore, the air chambers 31, the fuel supply flow paths 41, and the air supply flow paths 32 can be easily formed by integrally molding the burner plate 14a by metal lamination technology or the like. By integrally molding the burner plate 14a in this manner, the structure of the burner 14 is simplified, the burner 14 is downsized, and the manufacturing cost of the burner 14 is reduced as compared with a case where the members forming the air chambers 31, the fuel supply flow paths 41, and the air supply flow paths 32 are separate bodies from the burner plate 14a. In addition, leakage of hydrogen from joint portions of members is suppressed. Furthermore, the occurrence of a crack at joint portions due to thermal stress is suppressed.

In particular, in the combustion system 10, the fuel manifold 42 is formed in the burner plate 14a. Therefore, the fuel manifold 42 can be easily formed by integrally molding the burner plate 14a by metal lamination technology or the like. By integrally molding the burner plate 14a in this manner, the structure of the burner 14 is simplified, the burner 14 is downsized, and the manufacturing cost of the burner 14 is reduced as compared with the case where the members forming the fuel manifold 42 are separate bodies from the burner plate 14a. In addition, leakage of hydrogen from joint portions of members is suppressed. Furthermore, the occurrence of a crack at joint portions due to thermal stress is suppressed. The number of fuel supply pipes 14b can also be reduced.

Note that each of divided portions (for example, each of portions obtained by dividing at predetermined angles in the circumferential direction) of the burner plate 14a may be integrally molded by metal lamination technology or the like, and the obtained members may be assembled. Also in this case, the manufacturing cost of the burner 14 is reduced, leakage of hydrogen from joint portions of the member is suppressed, and occurrence of a crack in the joint portions due to thermal stress is suppressed.

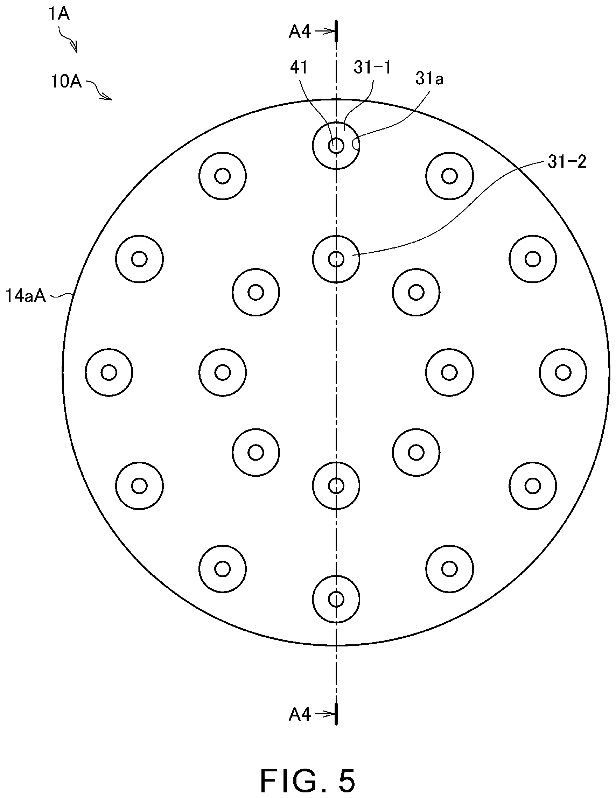

Hereinafter, a gas turbine system according to modifications will be described with reference to Figs. 5 to 10. Note that, in gas turbine systems according to the modifications described below, the configuration other than that of the burner plate is similar to that of the gas turbine system 1 described above, and thus description thereof is omitted.

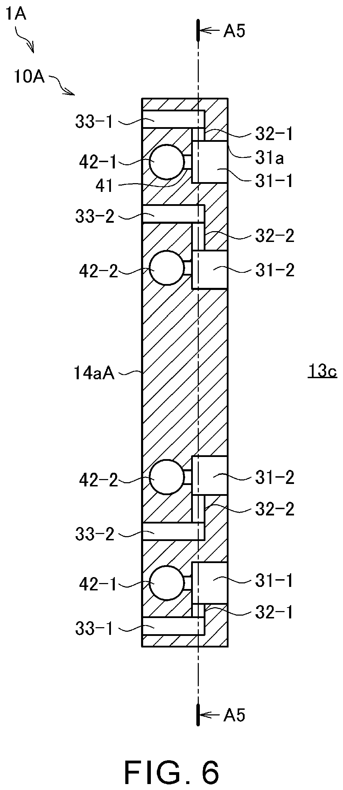

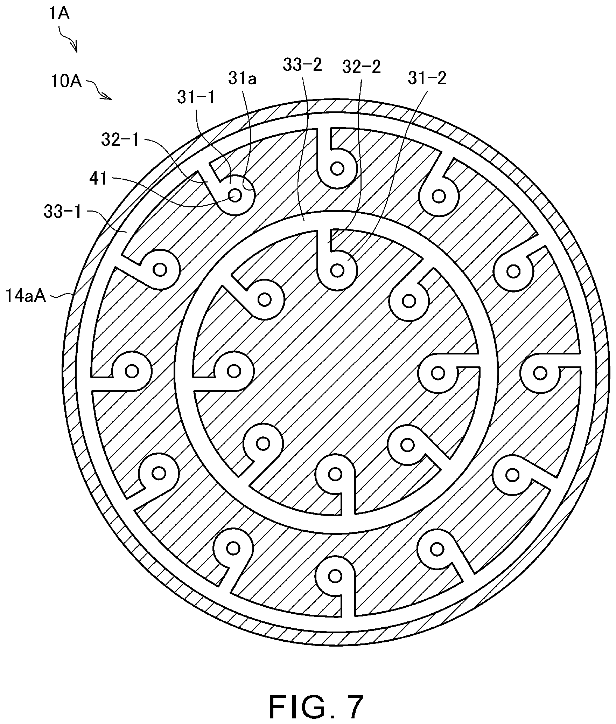

Fig. 5 is a diagram of a burner plate 14aA according to a first modification as viewed from the combustion chamber 13c side. Fig. 6 is a cross-sectional view taken along line A4-A4 in Fig. 5. That is, Fig. 6 is a cross-sectional view of the burner plate 14aA as viewed in the radial direction. Fig. 7 is a cross-sectional view taken along line A5-A5 in Fig. 6. That is, Fig. 7 is a cross-sectional view of the burner plate 14aA as viewed in the axial direction.

As illustrated in Figs. 5 to 7, a combustion system 10A of a gas turbine system 1A according to the first modification includes the burner plate 14aA. The burner plate 14aA is different from the burner plate 14a described above in the number and the arrangement of air chambers 31.

As illustrated in Figs. 5 to 7, similarly to the burner plate 14a described above, in the burner plate 14aA, air chambers 31, air supply flow paths 32, air manifolds 33, fuel supply flow paths 41, and fuel manifolds 42 are formed.

In the burner plate 14aA, a plurality of air chambers 31-1 and a plurality of air chambers 31-2 are formed as the air chambers 31. The plurality of air chambers 31-1 is air chambers 31 included at intervals in the circumferential direction at the outermost position in the radial direction among the plurality of air chambers 31 formed in the burner plate 14aA. The plurality of air chambers 31-2 is air chambers 31 included at intervals in the circumferential direction at positions on the radially inner side with respect to the plurality of air chambers 31-1 among the plurality of air chambers 31 formed in the burner plate 14aA.

In the burner plate 14aA, an air manifold 33-1 and an air manifold 33-2 are formed as the air manifolds 33. The air manifold 33-1 and the air manifold 33-2 each have an annular shape extending in the circumferential direction of the burner plate 14aA. The air manifold 33-1 is located on the outermost side in the radial direction among the plurality of air manifolds 33 formed in the burner plate 14aA. The air manifold 33-2 is located on the radially inner side with respect to the air manifold 33-1.

Each of the air chamber 31-1 is connected with the air manifold 33-1 via an air supply flow path 32-1. Therefore, air is supplied from the air manifold 33-1 to each of the air chambers 31-1 via one of the air supply flow paths 32-1. Each of the air chambers 31-2 is connected with the air manifold 33-2 via an air supply flow path 32-2. Therefore, air is supplied from the air manifold 33-2 to each of the air chambers 31-2 via one of the air supply flow paths 32-2.

In the burner plate 14aA, a fuel manifold 42-1 and a fuel manifold 42-2 are formed as the fuel manifolds 42. The fuel manifold 42-1 and the fuel manifold 42-2 each have an annular shape extending in the circumferential direction of the burner plate 14aA. The fuel manifold 42-1 is located on the outermost side in the radial direction among the plurality of fuel manifolds 42 formed in the burner plate 14aA. The fuel manifold 42-2 is located on the radially inner side with respect to the fuel manifold 42-1.

Each of the air chambers 31-1 is connected with the fuel manifold 42-1 via a fuel supply flow path 41. Therefore, hydrogen is supplied from the fuel manifold 42-1 to each of the air chambers 31-1. Each of the air chambers 31-2 is connected with the fuel manifold 42-2 via a fuel supply flow path 41. Therefore, hydrogen is supplied from the fuel manifold 42-2 to each of the air chambers 31-2.

As described above, similarly to the combustion system 10 described above, the combustion system 10A includes: the combustion chamber 13c; the cylindrical air chambers 31 each having an injection hole 31a facing the inside of the combustion chamber 13c; the fuel supply flow paths 41 each connected with an air chamber 31; and the air supply flow paths 32 each connected with a side surface of an air chamber 31. As a result, the similar effects to those of the combustion system 10 described above are achieved.

In particular, in the combustion system 10A, a plurality of groups of the plurality of air chambers 31 included at intervals in the circumferential direction is arranged at an interval in the radial direction. This makes it possible to increase the number of air chambers 31, and thus the fuel supplied to the burner plate 14aA can be distributed to more air chambers 31. Therefore, in each of the air chambers 31, the fuel can be mixed with the air more effectively. Therefore, it is possible to more effectively suppress exposure of the burner 14 to the high-temperature combustion gas. Therefore, the burner 14 can be protected from the flame more effectively. Furthermore, generation of NOx is more easily suppressed.

The air chambers 31-1 and the air chamber 31-2 have been described above with reference to Figs. 5 to 7. However, the number and the arrangement of the air chambers 31-1 and the air chambers 31-2 are not limited to the example of Figs. 5 to 7. For example, the plurality of air chambers 31-1 and the plurality of air chambers 31-2 may be included at equal intervals in the circumferential direction or may be included at unequal intervals in the circumferential direction.

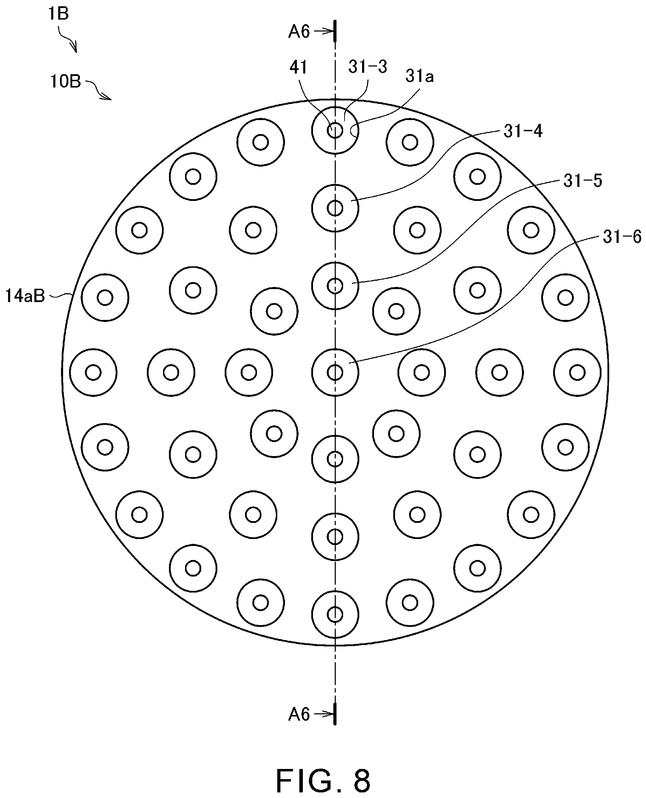

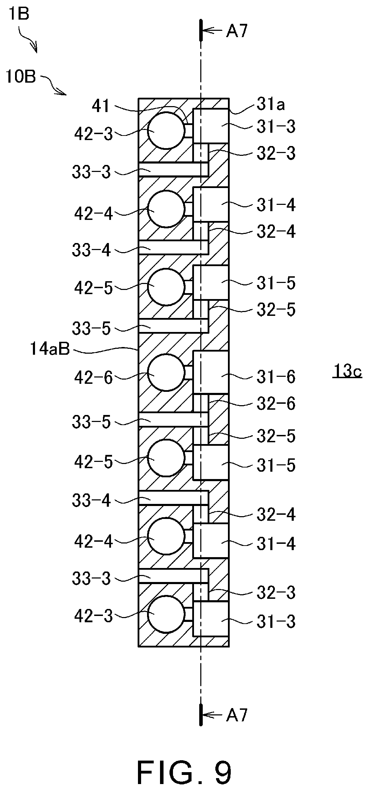

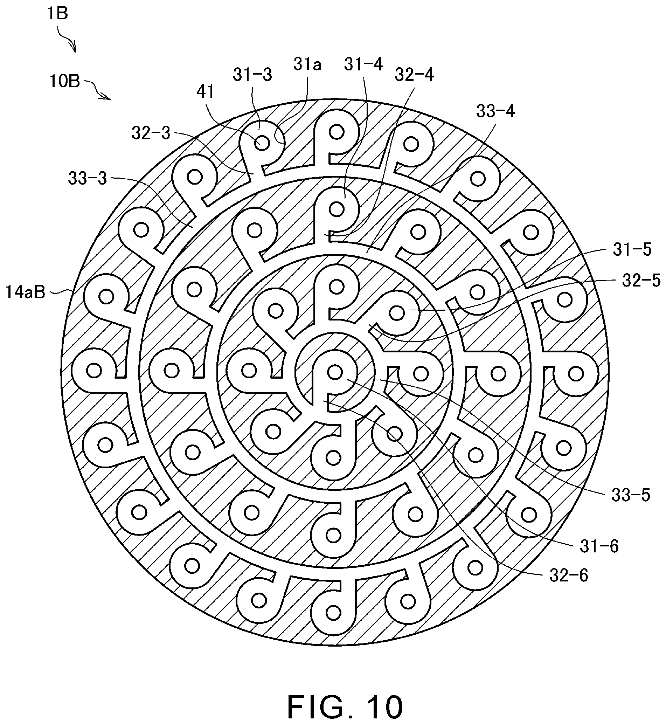

Fig. 8 is a diagram of a burner plate 14aB according to a second modification as viewed from the combustion chamber 13c side. Fig. 9 is a cross-sectional view taken along line A6-A6 in Fig. 8. That is, Fig. 9 is a cross-sectional view of the burner plate 14aB as viewed in the radial direction. Fig. 10 is a cross-sectional view taken along line A7-A7 in Fig. 9. That is, Fig. 10 is a cross-sectional view of the burner plate 14aB as viewed in the axial direction.

As illustrated in Figs. 8 to 10, a combustion system 10B of a gas turbine system 1B according to the second modification includes the burner plate 14aB. The burner plate 14aB is different from the burner plate 14a and the burner plate 14aA described above in the number and the arrangement of air chambers 31.

As illustrated in Figs. 8 to 10, similarly to the burner plate 14a described above, in the burner plate 14aB, air chambers 31, air supply flow paths 32, air manifolds 33, fuel supply flow paths 41, and fuel manifolds 42 are formed.

In the burner plate 14aB, as the air chambers 31, a plurality of air chambers 31-3, a plurality of air chambers 31-4, a plurality of air chambers 31-5, and one air chamber 31-6 are formed. The plurality of air chambers 31-3 is air chambers 31 included at intervals in the circumferential direction at the outermost position in the radial direction among the plurality of air chambers 31 formed in the burner plate 14aB. The plurality of air chambers 31-4 is air chambers 31 included at intervals in the circumferential direction at positions on the radially inner side with respect to the plurality of air chambers 31-3 among the plurality of air chambers 31 formed in the burner plate 14aB. The plurality of air chambers 31-5 is air chambers 31 included at intervals in the circumferential direction at positions on the radially inner side with respect to the plurality of air chambers 31-4 among the plurality of air chambers 31 formed in the burner plate 14aB. The air chamber 31-6 is an air chamber 31 included on the radially inner side with respect to the plurality of air chambers 31-5. The air chamber 31-6 is included on the central axis of the burner plate 14aB.

In the burner plate 14aB, as the air manifolds 33, an air manifold 33-3, an air manifold 33-4, and an air manifold 33-5 are formed. The air manifold 33-3, the air manifold 33-4, and the air manifold 33-5 each have an annular shape extending in the circumferential direction of the burner plate 14aB. The air manifold 33-3 is located on the outermost side in the radial direction among the plurality of air manifolds 33 formed in the burner plate 14aB. The air manifold 33-4 is located on the radially inner side with respect to the air manifold 33-3. The air manifold 33-5 is located on the radially inner side with respect to the air manifold 33-4.

Each of the air chambers 31-3 is connected with the air manifold 33-3 via an air supply flow path 32-3. Therefore, air is supplied from the air manifold 33-3 to each of the air chambers 31-3 via one of the air supply flow paths 32-3. Each of the air chambers 31-4 is connected with the air manifold 33-4 via an air supply flow path 32-4. Therefore, air is supplied from the air manifold 33-4 to each of the air chambers 31-4 via one of the air supply flow paths 32-4. Each of the air chambers 31-5 is connected with the air manifold 33-5 via an air supply flow path 32-5. Therefore, air is supplied from the air manifold 33-5 to each of the air chambers 31-5 via one of the air supply flow paths 32-5. The air chamber 31-6 is connected with the air manifold 33-5 via an air supply flow path 32-6. Therefore, air is supplied from the air manifold 33-5 to the air chamber 31-6 via the air supply flow path 32-6.

In the burner plate 14aB, as the fuel manifolds 42, a fuel manifold 42-3, a fuel manifold 42-4, a fuel manifold 42-5, and a fuel manifold 42-6 are formed. The fuel manifold 42-3, the fuel manifold 42-4, and the fuel manifold 42-5 each have an annular shape extending in the circumferential direction of the burner plate 14aB. The fuel manifold 42-3 is located on the outermost side in the radial direction among the plurality of fuel manifolds 42 formed in the burner plate 14aB. The fuel manifold 42-4 is located on the radially inner side with respect to the fuel manifold 42-3. The fuel manifold 42-5 is located on the radially inner side with respect to the fuel manifold 42-4. The fuel manifold 42-6 is located on the radially inner side with respect to the fuel manifold 42-5. The fuel manifold 42-6 is included on the central axis of the burner plate 14aB and has, for example, a spherical shape.

Each of the air chambers 31-3 is connected with the fuel manifold 42-3 via a fuel supply flow path 41. Therefore, hydrogen is supplied from the fuel manifold 42-3 to each of the air chambers 31-3. Each of the air chambers 31-4 is connected with the fuel manifold 42-4 via a fuel supply flow path 41. Therefore, hydrogen is supplied from the fuel manifold 42-4 to each of the air chambers 31-4. Each of the air chambers 31-5 is connected with the fuel manifold 42-5 via a fuel supply flow path 41. Therefore, hydrogen is supplied from the fuel manifold 42-5 to each of the air chambers 31-5. Each of the air chambers 31-6 is connected with the fuel manifold 42-6 via a fuel supply flow path 41. Therefore, hydrogen is supplied from the fuel manifold 42-6 to the air chamber 31-6.

As described above, similarly to the combustion system 10 described above, the combustion system 10B includes: the combustion chamber 13c; the tubular air chambers 31 each having an injection hole 31a facing the inside of the combustion chamber 13c; the fuel supply flow paths 41 each connected with an air chamber 31; and the air supply flow paths 32 each connected with a side surface of an air chamber 31. As a result, the similar effects to those of the combustion system 10 described above are achieved.

In particular, in the combustion system 10B, as compared to the combustion system 10A described above, more groups of the plurality of air chambers 31, included at intervals in the circumferential direction, are arranged at intervals in the radial direction. Furthermore, in the combustion system 10B, unlike in the combustion system 10 or the combustion system 10A described above, the air chamber 31 is also disposed on the center side of the burner plate 14aB. This makes it possible to further increase the number of air chambers 31, and thus the fuel supplied to the burner plate 14aB can be distributed to even more air chambers 31. Therefore, in each of the air chambers 31, the fuel can be mixed with the air even more effectively. Therefore, it is possible to even more effectively suppress exposure of the burner 14 to the high-temperature combustion gas. Therefore, the burner 14 can be protected from the flame more effectively. Furthermore, generation of NOx is even more easily suppressed.

The air chambers 31-3, the air chambers 31-4, the air chambers 31-5, and the air chamber 31-6 have been described above with reference to Figs. 8 to 10. However, the number and the arrangement of the air chambers 31-3, the air chambers 31-4, the air chambers 31-5, and the air chamber 31-6 are not limited to the example of Figs. 8 to 10. For example, the plurality of air chambers 31-3, the plurality of air chamber 31-4, and the plurality of air chambers 31-5 may be each included at equal intervals in the circumferential direction or may be included at unequal intervals in the circumferential direction. For example, the air chamber 31-6 may be included in the vicinity of the center of the burner plate 14aB, and in this case, the number of the air chambers 31-6 may be plural.

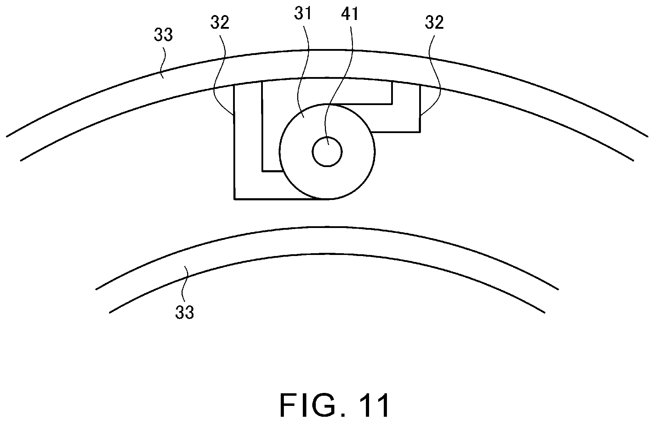

The example in which one air supply flow path 32 is connected to one air chamber 31 has been described above with reference to Figs. 2 to 10. However, a plurality of air supply flow paths 32 may be connected to one air chamber 31. Hereinafter, each example in which a plurality of air supply flow paths 32 is connected to one air chamber 31 will be described with reference to Figs. 11 to 13. Each of Figs. 11 to 13 is a diagram illustrating an example of a connection relationship between an air chamber 31 and air supply flow paths 32. The connection relationship between an air chamber 31 and air supply flow paths 32 described below can be applied to any of the burner plate 14a, the burner plate 14aA, or the burner plate 14aB described above.

In the following examples of Figs. 11 to 13, an air manifold 33 is disposed on each of a radially outer side (the upper side in Figs. 11 to 13) and a radially inner side (the lower side in Figs. 11 to 13) with respect to the air chamber 31.

In the example of Fig. 11, the air chamber 31 is connected with an air manifold 33 on the radially outer side via two air supply flow paths 32. Therefore, air is supplied from the air manifold 33 on the radially outer side to the air chamber 31 via the two air supply flow paths 32. Each of the air supply flow paths 32 is eccentrically connected with the air chamber 31 with respect to the central axis of the air chamber 31. Each of the air supply flow paths 32 is bent.

As described above, in the example of Fig. 11, the air supply flow paths 32 includes a plurality of flow paths (In the example of Fig. 11, two air supply flow paths 32) connected to one air chamber 31. As a result, in the air chamber 31, the swirling flow of the air swirling in the circumferential direction of the air chamber 31 can be easily generated more uniformly. Therefore, the fuel can be more effectively mixed with the air in the air chamber 31.

In particular, in the example of Fig. 11, the air chamber 31 is connected to only one of the air manifold 33 on the radially outer side with respect to the air chamber 31 or the air manifold 33 on the radially inner side with respect to the air chamber 31 via the air supply flow paths 32. Therefore, the radial distance between the adjacent air manifolds 33 can be reduced. Therefore, the number of air chambers 31 can be further increased.

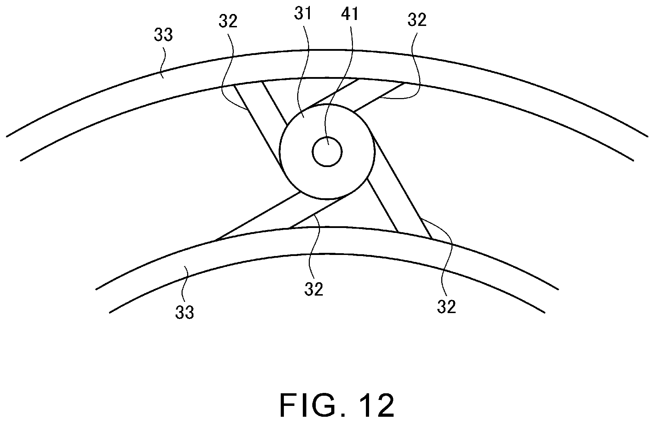

The example of Fig. 12 corresponds to an example in which the air chamber 31 is connected also to the air manifold 33 on the radially inner side via two air supply flow paths 32 in addition to the air manifold 33 on the radially outer side unlike in the example of Fig. 11. As described above, in the example of Fig. 12, the air chamber 31 is connected to both of the air manifold 33 on the radially outer side with respect to the air chamber 31 and the air manifold 33 on the radially inner side with respect to the air chamber 31 via the air supply flow paths 32. Therefore, the number of air supply flow paths 32 connected with the air chamber 31 can be further increased. Therefore, in the air chamber 31, the swirling flow of the air swirling in the circumferential direction of the air chamber 31 can be easily generated even more uniformly. In the example of Fig. 12, each of the air supply flow paths 32 is linear.

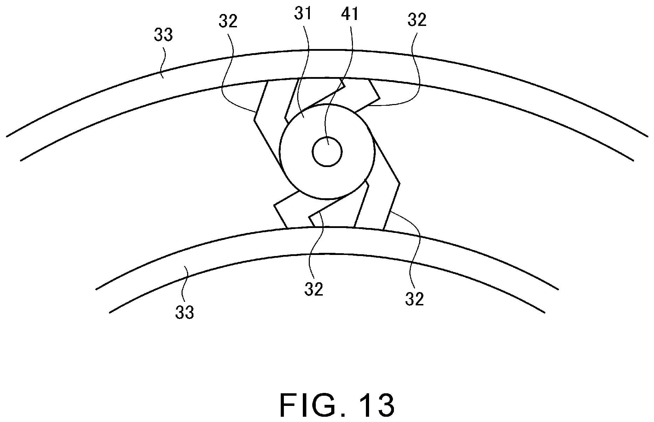

The example of Fig. 13 corresponds to an example in which each of the air supply flow paths 32 is bent unlike the example of Fig. 12. By bending each of the air supply flow paths 32, the radial distance between the adjacent air manifolds 33 can be easily reduced. Therefore, the number of air chambers 31 can be further increased. Furthermore, by adjusting the degree of bending or the like, the swirling flow of air in the air chamber 31 can be easily generated even more uniformly.

The examples of the connection relationship between the air chamber 31 and the air supply flow paths 32 has been described above with reference to Figs. 11 to 13. However, the connection relationship between the air chamber 31 and the air supply flow paths 32 is not limited to the above example. For example, the number of air supply flow paths 32 connected with the air chamber 31 may be three, or may be five or more. For example, the number of air supply flow paths 32 connected with the air manifold 33 on the radially outer side and the number of air supply flow paths 32 connected with the air manifold 33 on the radially inner side may be different from each other. For example, the air supply flow paths 32 connected with the air chamber 31 may be curved. For example, some of the plurality of air supply flow paths 32 connected with the air chamber 31 may be bent or curved.

Although the embodiments of the present disclosure have been described with reference to the accompanying drawings, it is naturally understood that the present disclosure is not limited to the above embodiments. It is clear that those skilled in the art can conceive various modifications or variations within the scope described in the claims, and it is understood that they are naturally also within the technical scope of the present disclosure.

The burner plate 14a, the burner plate 14aA, and the burner plate 14aB have been described above with reference to Figs. 2 to 10. However, the structures of the burner plate 14a, the burner plate 14aA, and the burner plate 14aB may be subjected to modification, addition, or deletion as appropriate. For example, in the burner plate 14a, the burner plate 14aA, and the burner plate 14aB, a plurality of fine through holes penetrating from the face on the combustion chamber 13c side to the face on the opposite side to the combustion chamber 13c may be added. As a result, air is injected from the space S in the combustor 13 towards the combustion chamber 13c through the through holes. This makes it possible to suppress the approach of flame to the burner plate 14a, the burner plate 14aA, and the burner plate 14aB.

In the above, the examples have been described in which the rotational power generated by the turbocharger 11 is used as energy for driving the generator 12 in the gas turbine system 1, the gas turbine system 1A, and the gas turbine system 1B. However, in the gas turbine system 1, the gas turbine system 1A, and the gas turbine system 1B, the rotational power generated by the turbocharger 11 may be used for other applications (for example, for the purpose of driving a mobile body such as a ship).

In the above description, the examples have been described in which the shape of the combustion chamber 13c is substantially cylindrical. However, the shape of the combustion chamber 13c is not limited to this example. For example, the combustion chamber 13c may have a substantially cylindrical space. The shapes of the burner plate 14a, the burner plate 14aA, and the burner plate 14aB can be modified as appropriate depending on the shape of the combustion chamber 13c.

In the example of Fig. 1 described above, the air sent from the compressor 11a to the combustor 13 passes between the outer curved surface of the liner 13b and the inner curved surface of the casing 13a and then is sent to the combustion chamber 13c. However, the path of the air sent from the compressor 11a to the combustor 13 is not limited to this example (namely, the reverse-flow type).

Since the present disclosure contributes to protecting burners from flame, it can, for example, contribute to Goal 7 "Ensure access to affordable, reliable, sustainable and modern energy for all" of the Sustainable Development Goals (SDGs).

### Reference Signs List

10:Combustion system, 10A:Combustion system, 10B:Combustion system, 13c:Combustion chamber, 14a:Burner plate, 14aA:Burner plate, 14aB:Burner plate, 31:Air chamber, 31-1:Air chamber, 31-2:Air chamber, 31-3:Air chamber, 31-4:Air chamber, 31-5:Air chamber, 31-6:Air chamber, 31a:Injection hole, 32:Air supply flow path, 32-1:Air supply flow path, 32-2:Air supply flow path, 32-3:Air supply flow path, 32-4:Air supply flow path, 32-5:Air supply flow path, 32-6:Air supply flow path, 41:Fuel supply flow path, 42:Fuel manifold, 42-1:Fuel manifold, 42-2:Fuel manifold, 42-3:Fuel manifold, 42-4:Fuel manifold, 42-5:Fuel manifold, 42-6:Fuel manifold

## Claims

1. A combustion system comprising:
a combustion chamber;
a cylindrical air chamber having an injection hole facing an inside of the combustion chamber;
a fuel supply flow path connected with the air chamber; and
an air supply flow path connected with a side surface of the air chamber.

2. The combustion system according to claim 1,
wherein the air supply flow path is eccentrically connected with the air chamber with respect to a central axis of the air chamber.

3. The combustion system according to claim 1,
wherein the air chamber has a cylindrical shape.

4. The combustion system according to claim 1,
wherein the air supply flow path includes a plurality of flow paths connected to the single air chamber.

5. The combustion system according to any one of claims 1 to 4,
wherein the air chamber, the fuel supply flow path, and the air supply flow path are formed in a burner plate that closes an end of the combustion chamber.

6. The combustion system according to claim 5,
wherein a fuel manifold is formed in the burner plate.
